(19) Europäisches Patentamt

European Patent Office

Office européen des brevets

(11) **EP 1 070 608 A1**

(12) **EUROPEAN PATENT APPLICATION**

(43) Date of publication:
**24.01.2001 Bulletin 2001/04**

(51) Int. Cl.[7]: **B60D 1/66**

(21) Application number: **00305949.0**

(22) Date of filing: **13.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.07.1999 GB 9916732**

(71) Applicant: **Turner, James Eric Mickleover, Derby DE3 5SF (GB)**

(72) Inventor: **Turner, James Eric Mickleover, Derby DE3 5SF (GB)**

(74) Representative:
**Watkins, Rosalind Philippa
Swindell & Pearson
48 Friar Gate
Derby DE1 1GY (GB)**

(54) **Jockey wheel**

(57) All known caravans and most large trailers are fitted with an auxiliary wheel (15) known as a jockey wheel. The jockey wheel (15) is a telescopic assembly in which an inner tube (24) with a wheel (28) mounted between forks at its lower end and a threaded insert (26) at its upper end, is located within an outer tube (16) within which is rotatably fitted a threaded bar (20). When the outer tube (16) is clamped to the 'A' frame of a caravan or large trailer, rotation of the threaded bar (20) within the threaded insert in the inner tube (24) causes the inner tube to raise or lower, thus raising or lowering the front end of the caravan or trailer when the wheel is in contact with the ground. The jockey wheel operates as a castor wheel, enabling steering of the caravan or trailer during manual handing and as a device for raising or lowering the caravan or trailer tow hitch to enable levelling, hitching or unhitching. The invention provided a jockey wheel (40) which in addition to enabling manoeuvring and levelling of caravans and large trailers also indicates that the nose-weight of the caravan or trailer is within its correct design limits.

Fig. 3

EP 1 070 608 A1

**Description**

The present invention relates to a jockey wheel and in particular to a jockey wheel for caravans and large trailers.

All known caravans and most large trailers have an auxiliary wheel referred to as a jockey wheel which is clamped to a section of the trailer chassis known as the 'A' frame.

The function of the jockey wheel is described with reference to the following drawings:

Fig. 1A is a diagrammatic top plan view of a prior art 'A' frame of a vehicle, illustrating the position of the jockey wheel;

Fig. 1B is a diagrammatic side view of the 'A' frame of Fig. 1A; and

Fig. 2 is a diagrammatic sectional view of a prior art jockey wheel.

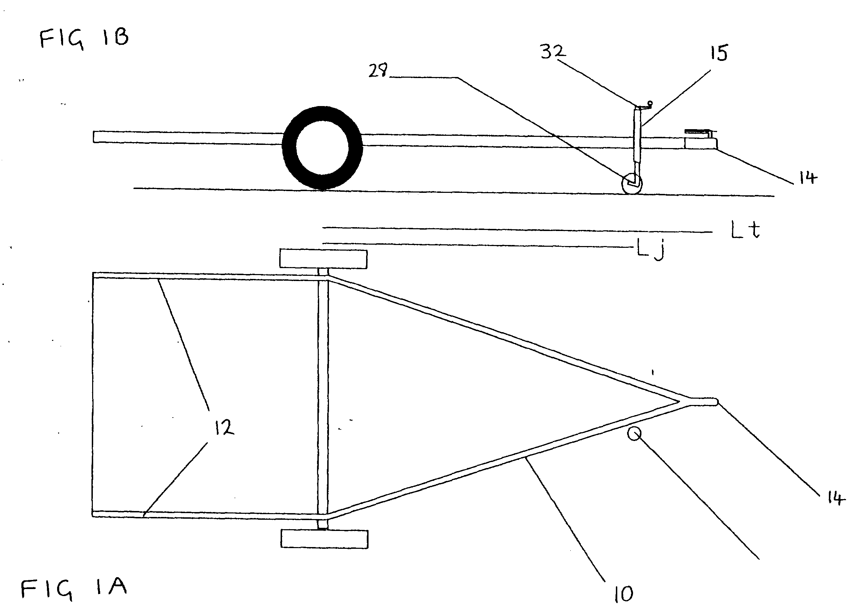

Referring to Figs. 1A to 2, the 'A' frame 10, which is located at the front of the vehicle, is an angular extension of two longitudinal chassis members 12 which meet at a tow hitch 14. A jockey wheel 15 is clamped to the 'A' frame 10, near the tow hitch 14.

The jockey wheel 15 operates in two modes: as a castor wheel enabling steering of the trailer during manual handling; and as a device for raising or lowering the caravan tow hitch 14 to enable levelling, hitching or unhitching.

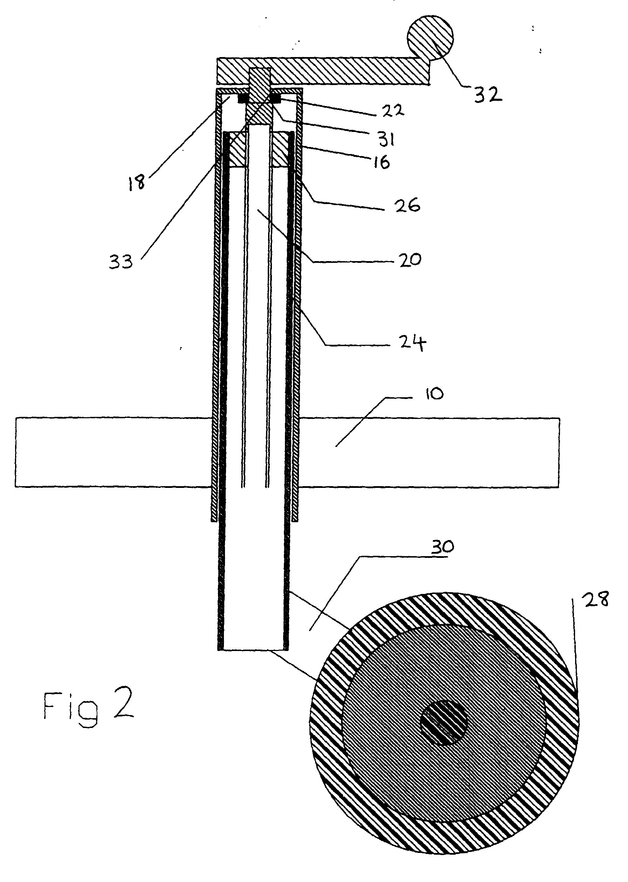

Referring to Fig. 2, a conventional jockey wheel 15 consists of the following components:

an outer tube 16 with an end plate 18 welded or formed at its upper end;
an elongate threaded bar 20, which has had a length of thread at its upper end removed by machining;
a thrust washer 22;
an inner tube 24, into the upper end of which is fixed a threaded insert 26;
a wheel 28 held in forks 30, which are welded to the lower end of the inner tube 24; and
a means for rotating the threaded bar e.g. a handle 32.

The threaded bar 20 is located within the outer tube. The machined portion of the threaded bar 20 is provided with a thrust washer 22 located on a land 31 left by the machining process. The machined portion of the threaded bar passes through a hole 33 drilled centrally through the end plate 18 of the outer tube 16, so that the thrust washer 22 bears against the inside face of the end plate 18. The winding handle 32 is fixed to the upper end of the machined area of the threaded bar 20 and keeps the threaded bar in position.

The two tubes 16 and 24 are linked by the threaded bar 20, which is screwed into the threaded insert 26 in the inner tube 24. Because the two tubes 16 and 24 are only connected by the threaded bar 20, the inner tube 24 is free to rotate around the axis of the threaded bar 20, allowing a castor action of the wheel. After clamping the outer tube 16 at a suitable height on the 'A' frame 10, the threaded bar 20 is rotated until the wheel 28 contacts the ground. As the wheel 28 contacts the ground the reaction due to the downward movement of the wheel 28 is converted to an upward movement of the thrust washer 22 at the upper end of the threaded bar 20. The thrust washer 22 contacts an inside face of the outer tube end plate 18 causing the front of the trailer to be raised. This operation is continued until the desired height is reached, either to hitch or unhitch the trailer or for levelling.

Reversing the direction of rotation lowers the front of the trailer.

Once the trailer is hitched, the inner tube 24 is fully retracted and the outer tube 16 raised and re-clamped at a higher position to prevent the wheel 28 fouling the ground.

All trailers and caravans have, in the interest of stability when towing and hence safety, a maximum permitted nose-weight (the weight acting down on to the tow hitch when under load) specified by the manufacturer. The nose weight is the percentage of the maximum laden weight of the caravan or trailer, which is supported by the tow hitch. Nose weights range from less than 1% to about 10% of the maximum laden weight.

Car manufacturers also specify a maximum tow hitch load. This is the down force of the trailer nose weight acting on to the vehicle's tow ball. This load often varies from the trailer manufacturer's specification.

A negative load on the tow hitch will also have a detrimental effect on stability when towing.

Nose weight should always be measured with the trailer at its operating level, that is with the tow hitch at the level of the tow ball of the towing vehicle. The dynamic effect of the mass of the trailer acting around the pivot of the wheels raises or lowers the nose weight significantly with changes in tow hitch height. Spring balances are available which measure the trailer nose weight. These require positioning beneath the tow hitch and often require packing to achieve the required level. A previous patent, Belgian Patent No. 886203 attempted to overcome these problems by using a resilient member in the area of the wheel mounting forks.

According to the present invention there is provided a jockey wheel arrangement including a first member attached to a ground engaging wheel and a second member attachable to a trailer chassis, the arrangement including resilient means for effecting the transfer of weight from the second member to the first member and means for indicating the extent of compression of the resilient means to provide an indication of the magnitude of a load applied to the second member by the trailer chassis.

Preferably means are provided for adjusting the relative positions of the first and second members substantially independently of the extent of compression of the resilient means.

The first and second members may comprise concentric tubes, the first member being slidably located within the second member.

The means for adjusting the relative positions of the first and second members may include a bar rotatably attached to the second member and attached to the first member by a threaded connection, such that rotation of the bar adjusts the relative positions of the bar and the first member and thus the relative positions of the first and second members. Preferably weight is transferred from the second to the first member via the bar.

The resilient means may be a compression spring located between a stop on the second member and a stop on the bar. The compression spring is preferably located between a thrust bearing provided above a shoulder on the bar and a bearing provided on an inside of an upper end of the second member.

The upper end of the second member may include an orifice through which the bar passes, an end of the bar being attachable to a handle to effect rotation of the bar.

According to the invention, there is further provided a jockey wheel arrangement comprising first and second concentric tubes, said first tube being slidably located within said second tube, a ground engaging wheel rotatably attached to said first tube, said second tube being attachable to a trailer chassis, means being provided to effect relative translation of said first and said second tubes, so that the relative position of said first and second tubes is indicative of the magnitude of a given load applied to the second tube by said trailer chassis.

According to the invention, there is further provided a caravan or trailer provided with a jockey wheel arrangement according to any preceding claim.

A specific embodiment of the invention will now be described by way of example with reference to the accompany drawings in which:

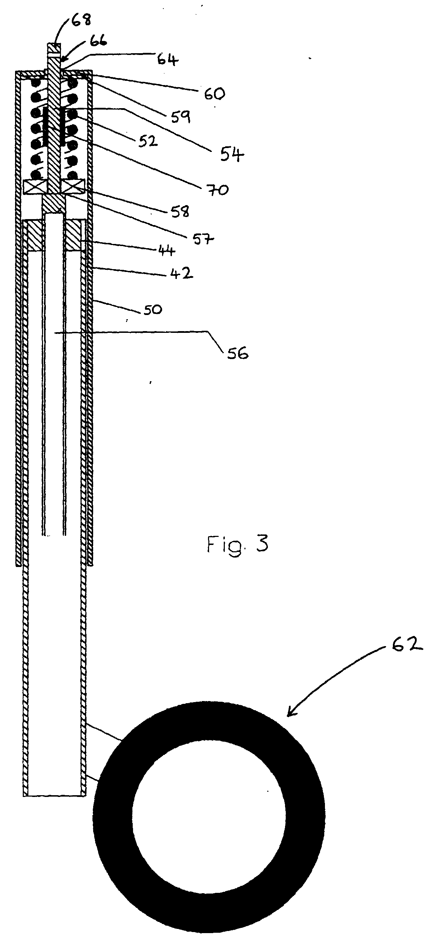

Fig. 3 is a diagrammatic sectional view of a load measuring jockey wheel in accordance with the present invention;

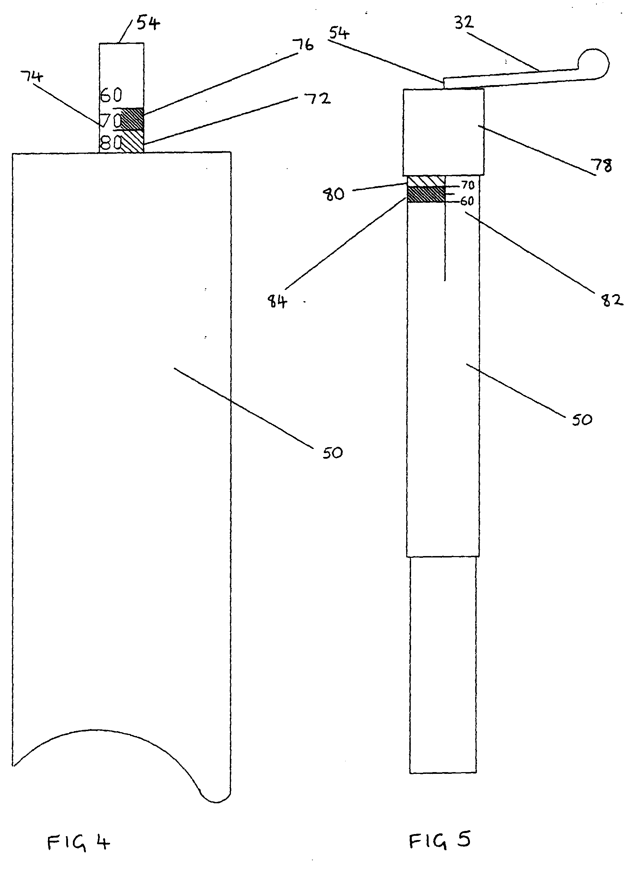

Figs. 4 and 5 are diagrammatic partial side views of upper parts of jockey wheels according to the invention, illustrating methods of nose weight indication.

Referring to Fig. 3, a nose weight indicating/measuring jockey wheel 40 in accordance with the present invention includes an inner tube 42 comprising a steel tube with a threaded insert 44 at its upper end and a wheel 46 held within forks 48 at its lower end. The jockey wheel further includes an outer steel tube 50 within which a resilient means in the form of a compression spring 52 is located around a threaded bar extension 54 of a threaded bar 56. The spring 52 is located between a thrust bearing 58, located on a land 57, and a low friction bearing 59 mounted on an inside face of an endplate 60 of the outer tube 50.

When the outer tube 50 is clamped to an 'A' frame of a vehicle, a winding handle may be turned (as described with reference to Fig. 2) to cause the threaded bar 56 to rotate inside the threaded insert 44 which is captive within the inner tube 42. This causes the inner tube 42 to raise or lower a wheel 62.

When the inner tube 42 is lowered and the wheel 62 contacts the ground, the weight of the front of the trailer or caravan is transferred via the land 57 on the threaded bar 56, the thrust bearing 58, the spring 52 and the low friction bearing 59 to the inner surface of the outer tube end plate 60. This compresses the spring 52.

As the spring 52 is compressed, the threaded bar extension 54 rises from its rest position. This movement continues until the nose weight of the trailer or caravan is balanced by the force of the spring. It will be seen therefore that the movement of the bar extension 54 relative to the outer tube 50 is proportional to the load applied. The winding mechanism still operates in its normal manner raising or lowering the front end of the trailer or caravan for hitching to or unhitching from the towing vehicle.

An extension 64 of the low friction bearing 59 passes through a hole 66 in the end plate 60 of the outer tube 50. The threaded bar extension 54 passes through the hole 66, within the extension 64 of the low friction bearing, and the winding handle (not illustrated in Fig. 3) may be fitted to an upper end 68 of the threaded bar extension 54. Rotation of the handle thus causes the threaded bar extension 54 to rotate within the low friction bearing 59.

The assembly of the threaded bar 56, the thrust bearing 58 and the bearing 59, the compression spring 52 and the threaded bar extension 10 is held under compression. A collar 70 prevents over compression of the spring 52 by contacting the inside face of the outer tube end plate 60 in the event of an overload.

Referring to Fig. 4, if the measured nose weight is correct a green band 72 or a mark 74 on the threaded bar extension 54 is exposed. Should the nose weight be incorrect, being either too high or too low, a red band 76 is exposed either above the green band 74 for a nose weight which is too low or below the green band 74 for a nose weight which is too high.

In another adaptation, referring to Fig. 5, a shroud 78 fitted to the threaded bar extension 54 exposes green or red coloured bands painted or etched into the outside surface of the outer tube 50. If the nose weight is correct a green band 80 or a mark on a scale 82 is exposed. If incorrect a red band 84 is exposed or indicated otherwise on the scale. Other mechanical or electronic means of indicating the measured load may also be applied.

As caravan manufacturers have a great variation in design nose weight, the design of this invention allows changing of the spring 52 with one of a more suitable rating.

Because of the slight linear displacement in the positions of the jockey wheel and tow hitch from the fulcrum of the trailer or caravan axle, the following calculation is required to provide the required rating for the spring.

$$Sr(N) = \frac{Nw(kg) \times Lt(m)}{Lj(m)}$$

Where:

Sr = The spring rating required (Newtons)

Nw = The nose weight required at the tow hitch (Kilograms)

Lt = The distance from the axle centre line to the centre of the tow hitch (metres)

Lj = The distance from the axle centre line to the centre of a transverse line across the 'A' frame at the centre line of the jockey wheel (metres).

The present invention will enable the user of a caravan or trailer to set the most suitable nose weight for their particular application and be able to reproduce this at any time with a high degree of confidence.

Further advantages of the present invention are that in the first case when the wheel 62 is in contact with the ground and under load a degree of assistance is given when manually lifting the tow hitch as in hitching or unhitching. In the second case manual handing of the caravan or trailer over uneven ground is eased because of the softened suspension due to the spring.

**Claims**

1. A jockey wheel arrangement including a first member attached to a ground engaging wheel and a second member attachable to a trailer chassis, the arrangement including resilient means for effecting the transfer of weight from the second member to the first member and means for indicating the extent of compression of the resilient means to provide an indication of the magnitude of a load applied to the second member by the trailer chassis.

2. A jockey wheel arrangement according to claim 1 wherein means are provided for adjusting the relative positions of the first and second members substantially independently of the extent of compression of the resilient means.

3. A jockey wheel arrangement according to claim 1 or claim 2 wherein the first and second members comprise concentric tubes, the first member being slidably located within the second member.

4. A jockey wheel arrangement according to claim 3 when appended to claim 2 wherein the means for adjusting the relative positions of the first and second members includes a bar rotatably attached to the second member and attached to the first member by a threaded connection, such that rotation of the bar adjusts the relative positions of the bar and the first member and thus the relative positions of the first and second members.

5. A jockey wheel arrangement according to claim 4 wherein weight is transferred from the second to the first member via the bar.

6. A jockey wheel arrangement according to claim 5 wherein the resilient means is a compression spring located between a stop on the second member and a stop on the bar.

7. A jockey wheel arrangement according to claim 6 wherein a compression spring is located between a thrust bearing provided above a shoulder on the bar and a bearing provided on an inside of an upper end of the second member.

8. A jockey wheel arrangement according to claim 7 wherein the upper end of the second member includes an orifice through which the bar passes, an end of the bar being attachable to a handle to effect rotation of the bar.

9. A jockey wheel arrangement comprising first and second concentric tubes, said first tube being slidably located within said second tube, a ground engaging wheel rotatably attached to said first tube, said second tube being attachable to a trailer chassis, means being provided to effect relative translation of said first and said second tubes, so that the relative position of said first and second tubes is indicative of the magnitude of a given load applied to the second tube by said trailer chassis.

10. A caravan or trailer provided with a jockey wheel arrangement according to any preceding claim.

11. Any novel subject matter or combination including novel subject matter disclosed herein, whether or not within the scope of or relating to the same invention as any of the preceding claims.

EP 1 070 608 A1

FIG 1B

32    15

29

14

Lt

Lj

12

FIG 1A

14

10

Fig 2

Fig. 3

FIG 4

FIG 5

European Patent Office

**EUROPEAN SEARCH REPORT**

Application Number

EP 00 30 5949

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 29 16 125 A (S.O. WILJE)<br>31 October 1979 (1979-10-31)<br>* claims 1-8; figures 1-6 * | 1-11 | B60D1/66 |
| X | DE 29 38 639 A (WUSTL)<br>9 April 1981 (1981-04-09)<br>* claims 1-3; figures 1-3 * | 1-11 | |
| A | DE 35 24 238 A (F. BUCHNER)<br>12 February 1987 (1987-02-12)<br>* claims 1-15; figures 1-11 * | 1 | |
| A | FR 2 318 764 A (G. LAFFARGUE)<br>18 February 1977 (1977-02-18)<br>* figures 1-4 * | 1 | |
| A | DE 28 33 930 A (F.X. SEDELMAYER JUN.)<br>21 February 1980 (1980-02-21)<br>* figures 1-3 * | 1 | |
| | | | **TECHNICAL FIELDS SEARCHED (Int.Cl.7)**<br><br>B60D<br>B60S |

The present search report has been drawn up for all claims

| Place of search | Date of completion of the search | Examiner |
|---|---|---|
| THE HAGUE | 26 October 2000 | Kusardy, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 00 30 5949

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2000

| Patent document cited in search report | | Publication date | Patent family member(s) | Publication date |
|---|---|---|---|---|
| DE 2916125 | A | 31-10-1979 | NONE | |
| DE 2938639 | A | 09-04-1981 | NONE | |
| DE 3524238 | A | 12-02-1987 | NONE | |
| FR 2318764 | A | 18-02-1977 | NONE | |
| DE 2833930 | A | 21-02-1980 | NONE | |

EPO FORM P0459

For more details about this annex : see Official Journal of the European Patent Office, No. 12/82